Europäisches Patentamt

European Patent Office

Office européen des brevets

(11) Publication number: 0 349 035
A2

(12) **EUROPEAN PATENT APPLICATION**

(21) Application number: 89201556.1

(22) Date of filing: 14.06.89

(51) Int. Cl.⁴: B01J 19/24 , C02F 1/58

(30) Priority: 16.06.88 US 207469

(43) Date of publication of application:
03.01.90 Bulletin 90/01

(84) Designated Contracting States:
BE DE FR GB IT NL SE

(71) Applicant: SHELL INTERNATIONALE
RESEARCH MAATSCHAPPIJ B.V.
Carel van Bylandtlaan 30
NL-2596 HR Den Haag(NL)

(72) Inventor: Faith, Larry Eugene
10235 Pineland
Houston Texas 77024(US)
Inventor: Turner III, Louis Hamton
10 Russet Wood Court
The Woodlands Texas 77381(US)
Inventor: Martin, Godfrey Quentin
deceased
deceased(US)

(74) Representative: Aalbers, Onno et al
P.O. Box 302
NL-2501 CH The Hague(NL)

(54) **Medium temperature hydrolysis reactor.**

(57) A staged hydrolyzer for the destruction of stable, complex iron cyanides in the resultant slurry during the gasification of coal utilizes a combination of separator walls having a small orifice for increasing flow velocity and baffles for providing intense stirring of the slurry. The hydrolyzer provides a closer approach to plug flow and the associated improvement in reaction conversion.

FIG.3

EP 0 349 035 A2

## MEDIUM TEMPERATURE HYDROLYSIS REACTOR

The invention relates to a hydrolyzer for the destruction of any stable, complex cyanide in a slurry treating process or plug flow stream.

Hydrolyzers have been in use for several years in the treatment of chemical wastes. These systems have not been used in the chemical industry for destroying cyanides because cyanides are not a serious problem in these applications. The agriculture industry, on the other hand, has used hydrolyzers in the destruction of cyanides and their reduction to non-toxic products. Use there has been for cyanides which are easily destroyed, such as sodium cyanide and not for stable complex iron cyanides which are very difficult to destroy. Also, hydrolyzers of the jet stirred type do not provide thorough mixing and are therefore very inefficient. A "jet-stirred" reactor is one in which its contents are mixed only by the momentum of the stream.

It is an object of the invention is to provide a three-stage hydrolyzer arranged in one vessel.

It is another object of the invention to provide a hydrolyzer which is suitable for slurries or plug flows by promoting downward flow of both liquid and solids through each stage with gravity acting to help the flow of solids.

It is still another object of the invention to provide a hydrolyzer having means at the inlet to each stage to increase the inlet velocity and distribution of a slurry or plug flow in each stage.

The invention therefore provides a hydrolysis reactor for the destruction of stable complex cyanides in a slurry treating process or plug flow stream, characterized by:
- a pressure vessel having inlet and outlet ports; and
- a stage divider within said vessel for dividing said vessel into a plurality of stages wherein said stages formed thereby are configured one above the other or one after the other and wherein said stage divider comprises a separator wall having an axial opening $d_0$ therein for increasing flow velocity and a baffle plate in fixed relationship to said separator wall for providing intense stirring of the slurry or plug flow stream.

During the gasification of coal, water is used to wash the slag produced thereby and to scrub the product gas (sometimes referred to as "synthesis gas" or "syngas") to remove solid particles (fly ash) therein. The slurry resulting from this cleaning process must itself be cleaned prior to reuse or discharge. A slurry is defined as an aqueous stream containing suspended solids, with or without dissolved salts. A solution, on the other hand, contains only dissolved salts, i.e., no suspended solids. Medium Temperature Hydrolysis (MTH) is the first step of the water cleanup section. Slurry from the gas cleanup section contains acid gases, which include hydrogen cyanide (HCN). HCN is ionized in the slurry, and some of the $CN^-$ forms a very stable complex ion, $Fe(CN)_6^{-4}$. The effective means of destroying $CN^-$ is hydrolysis. $CN^-$ hydrolyzes easily, whereas $Fe(CN)_6^{-4}$ requires a high temperature for effective reaction.

According to the invention a coal gasification plant utilizes a medium temperature hydrolysis (MTH) reactor operating at about 180 °C to destroy any stable complex cyanide, primarily $Fe(CN)_6^{-4}$ in the effluent slurry. The complex ions dissociate and the $CN^-$ hydrolyzes to form ammonia ($NH_3$) and various organic compounds. The MTH is designed primarily for the gasification of Texas lignite but may also be used for Illinois No. 5 coal although complex cyanide formation is very low in the gasification of the latter coal.

The effluent slurry is heated, first in a feed-product exchanger and then with steam, to about 180 °C. The heated slurry then enters the hydrolyzer, three liquid full vessels in series, for complex cyanide dissociation. Complex iron cyanide hydrolyzes ultimately to dissolved iron, carbonate and ammonia. The slurry leaves the reactor and is further cleaned and cooled for reuse or discharge.

The slurry bleed is depressurized, mainly through a wear tube and, to a lesser extent through the MTH, from about 27 bar in the wet scrubbing system to about 2,4 bar or less in the sour slurry stripper (SSS) feed vessel. A wear tube is a narrow pipe section in which the slurry flows at high velocity thereby creating a large pressure drop and significant erosion rates. The wear tube therefore allows control valves to operate with much lower pressure drops and erosion rates.

Common reactor configurations for continuous process streams are a single vessel, a sequence of staged vessels, and a pipe. For a given conversion, a pipe, or plug-flow reactor, has the smallest reactor volume. The largest volume occurs in a single vessel, which may be completely or partially mixed. A sequence of stages has a total reactor volume between these two extremes.

The MTH reactor according to the invention in or coal gasification reactor is a three-stage vessel, each stage being about 2,70 metres long and 0.90 metres in diameter, and is designed for at least 99% destruction of cyanides in the effluent slurry. Total volume of the reactor is about 5800 litres. Other MTH reactor configurations are available as discussed above; however, the three-stage reactor is much smaller than the single vessel and does not have the length of the pipeline reactor. Also, the diameter of a pipeline for MTH, or for any reaction in a slurry, is limited by potential settling of the slurry solids. The slurry velocity must be sufficient to prevent the accumulation of solids along the bottom of the pipe. Hence, a pipeline MTH for a gasification system would be limited to a maximum diameter of about 7,5 cm and would be extremely long.

The three MTH stages are arranged vertically one above the other in a pressure vessel. The reaction stages run liquid full with downward flow. In each stage, the slurry is stirred by deflection of the inlet jet, thereby promoting thorough mixing of the slurry in each stage. Mixing is accomplished solely by means of the selected arrangement and placement of baffles and separators within the reactor. Essentially perfect mixing is accomplished without the requirement of mechanical mixers such as rotating paddles. Solids entering each stage will flow with the liquid and settle to the bottom outlet.

The invention will now be described by way of example in more detail by reference to the accompanying drawings in which:

Fig. 1 depicts the flow pattern in a conventional jet-stirred reactor, of which a longitudinal section is showing;

Fig. 2 is a simplified block diagram of a coal gasification system employing the invention;

Fig. 3 is a longitudinal section of a hydrolysis reactor according to an advantageous embodiment of the invention; and

Fig. 4 is a schematic drawing of the stage dividers of fig. 3.

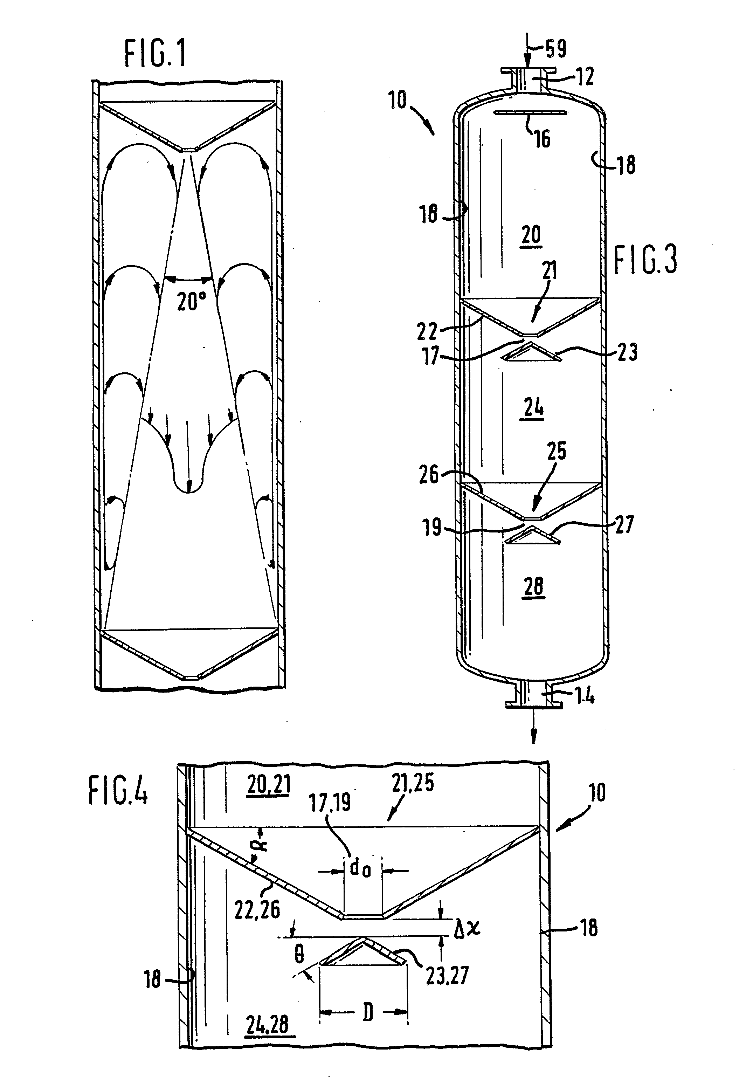

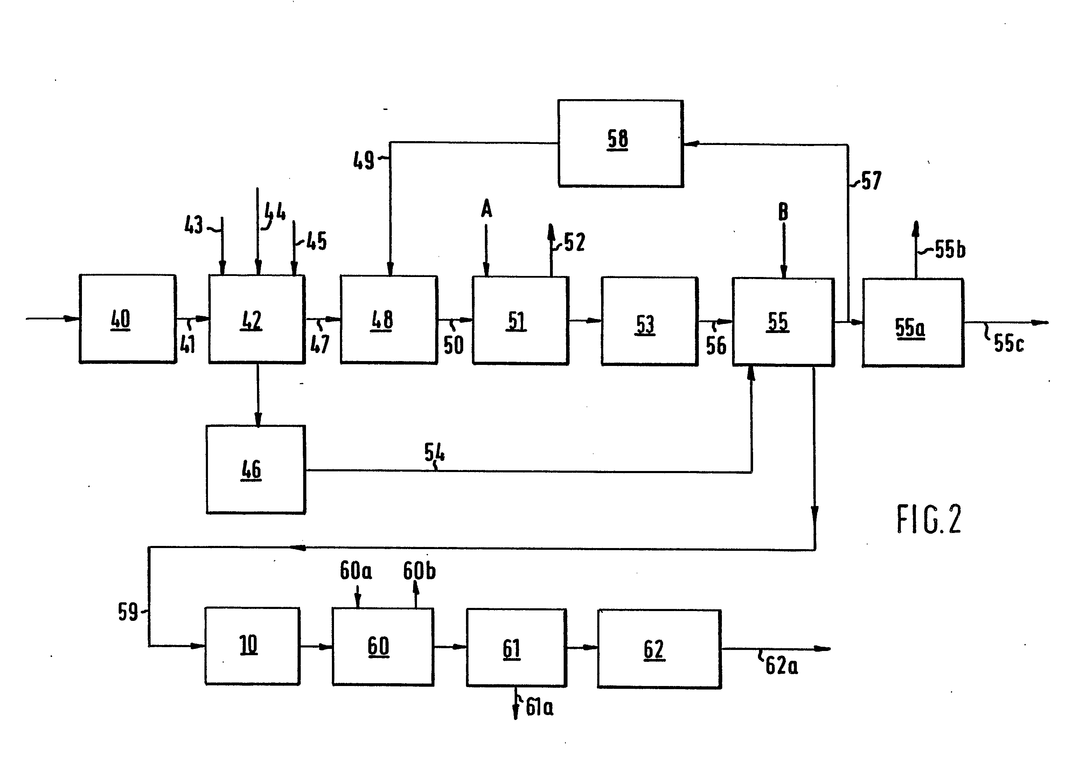

Referring now to fig. 1, a jet-stirred reactor is shown. The fluid mechanics and mixing occurring in this type of reactor are well known in the art and the flow patterns in such a reactor are shown in Figure 1. The jet entrains the surrounding fluid and spreads out with a cone angle of 20 degrees as shown. A toroidal circulation pattern extending from top to bottom occurs outside the jet whereas inside the jet the velocity profile takes the familiar bell shaped curve.

During the gasification of coals containing high organic nitrogen, such as Texas lignite, complex ferrocyanide is produced in significant concentration in the slurry bleed. This could result in a refinery discharge level of cyanide greater than that allowed by an operating permit. Hence, medium temperature hydrolysis (MTH) of the slurry bleed is included to destroy any complex cyanide produced from coal gasification.

In a typical coal gasification system employing the present invention, such as that generally represented in Fig. 2, principal ingredients such as coal, steam, nitrogen and oxygen enter the gasifier 42 wherein the coal is gasified. The ash, in the form of slag, gravitates into a slag quench tank 46 and thereafter is conveyed to a receiving bin and from this bin the solids are conveyed to a disposal site.

The product gases 47 flowing from the gasifier 42, are quenched by recycled product gas 49 in the quench section 48 and then enter a waste heat boiler (syngas cooler) 51 from which high pressure saturated steam 52 is withdrawn. The product gas leaves the waste heat boiler and, after removal of dry solids therefrom, (block 53), flows into a primary venturi-type scrubber 55 for removal of wet solids. Water discharges from the primary scrubber and flows then to the water cleanup section comprising a staged hydrolyzer 10, a sour slurry stripper 60 provided with a steam supply 60a and an acid gas outlet 60b and a clarifier 61 provided with a sludge outlet 61a to disposal. Product gas leaves the primary scrubber and flows into a secondary venturi-type scrubber 55 provided with a water supply B for further removal of wet solids, water therefrom being discharged into the water cleanup section. Product gas leaves the secondary scrubber and passes an acid gas removal 55a provided with an acid gas outlet 55b and a product gas outlet 55c. A portion of the product gas is returned through a recycle gas compressor 58 to quench the stream of product gas just as it leaves the gasifier 42.

Fig. 2 is a simplified block diagram of the pertinent portions of the coal gasification system utilizing the instant invention. Pulverized coal from the feed or coal handling system 40 is fed into the burners 41 of the gasifier 42 along with nitrogen 43, oxygen 44 and steam 45. Ash, in the form of slag, gravitates into a slag quench tank 46 and thereafter is conveyed to a receiving bin for disposal. The product gas 47 rises in the gasifier 42 to the quench section 48, where it is cooled by recycled product gas (quench gas 49) and exits the reactor via a radiant duct 50 into the syngas cooler 51 where saturated steam 52 is withdrawn. Via the line A boiling feed water is supplied. Solids in the form of fly ash are conveyed to the dry solids removal section 53, or cyclone separator, where a large fraction of the solids are separated from the gas. The slag bath bleed 54 is fed into the wet solids removal section 55, along with the overhead gas 56 from the cyclone separator 53. Part of the cleaned and cooled (77 °C) product gas 57 from the wet solids removal section 55 is then fed back, by means of recycle gas compressor 58, as quench gas 49 into the quench 48 of the reactor. The quench gas 49 entering the quench 48 cools the product gas 47 such that entrained fly ash particles are solidified and fall to the bottom of the reactor.

The reactor, which comprises the gasifier 42 and the quench section 48, is a pressurized, entrained-bed gasifier operated under slagging conditions. The function of the reactor is to provide an appropriate volume (residence time) and appropriate mixing conditions to gasify pulverized coal with oxygen and, if required, some steam. The three reactants - coal, oxygen and steam - are introduced into the gasifier 42 through diametrically opposed burners 41. The molten slag runs down the membrane wall to the bottom of the reactor and exits through a slag tap into a water bath 46. Heat is dissipated from the hot gas slag to the water bath 46, a circulating pump and water cooler being used to remove this heat. A bleed is provided in the circulation stream to maintain the fines concentration in the slag bath. The slurry 59 entering the MTH 10 is therefore comprised of three streams: (1) concentrated slurry from the primary separator (1st venturi), (2) dilute slurry from the secondary separator (2nd venturi) and (3) the bleed 54 from the slag bath.

In the wet scrubbing system 55, HCN will be absorbed into the slurry and produce free cyanide, which will react easily with polysulfide to form thiocyanate ($SCN^-$) and reduce the cyanide concentration. Thiocyanate is reasonably stable but can be oxidized by biotreatment and will be removed in the refinery biotreater 62, which is provided with a water outlet 62a to discharge. Some of the cyanide in the slurry, however, will form stable complex cyanides, primarily ferrocyanide. The complex iron cyanide is very stable and ordinarily passes unchanged through an effluent treating system unless a cyanide destruction step is included in the treatment scheme.

Treatment in the wet solids removal section 55 by ammonium polysufide may reduce the stable iron cyanide or prevent its formation, but its effectiveness may not be complete. Hence, hydrolysis of the slurry bleed 59 at an elevated temperature is used to ensure destruction of complex ferrocyanide, the reaction rate being faster at higher temperatures.

The invention includes hydrolysis of the slurry bleed in a temperature range of 170-195 °C, in particular about 180 °C, and at a pH greater than 8.0, in particular 8.5, for destroying complex cyanides. The slurry bleed from the primary separator is heated from about 180 °C to the reaction temperature of about 180 °C, heat being provided by a feed-product heat exchanger and a steam feed heater (not shown).

The slurry 59 is fed to the MTH reactor 10 which is comprised of three hydrolysis chambers in series and which will provide the residence time necessary for reaction. The chambers are, for example, vertical and are run liquid full with downward flow. The vessels are stirred solely by deflection of the inlet jet. Solids entering the vessels flow and settle to the bottom and are swept out with the water. Destruction of iron cyanide is expected to be greater than 99% and any other cyanide, free or complex, will be more completely hydrolyzed. It will be appreciated that in processes where the stream contains no solids, the orientation of the vessels is not critical and they can be arranged vertically and/or horizontally with up flow, down flow, and/or horizontal flow.

Referring now to Fig. 3, a staged hydrolyzer, or hydrolysis reactor, 10 is shown having an inlet port 12 and an outlet port 14. The slurry 59 enters the hydrolyzer 10 at the inlet port 12 where it encounters a first baffle 16. The inlet slurry 59 has, for example, a high concentration of cyanides on the order of 10-700 ppmw. The first baffle 16 serves to distribute the slurry 59 outwardly to the walls 18 of the reactor 10 and enhances mixing of the solids in suspension. The slurry 59 enters the first stage 20 of the reactor 10 and proceeds to a stage divider 21 comprising a separator 22 and a second baffle 23. The stage divider is shown generally at 21 and is to be subsequently described. The slurry then enters the second stage 24 of the reactor 10, proceeds through a stage divider 25 comprising a separator 26 and a third baffle 27 and enters the third stage 28 of the reactor 10. Any solids in the slurry will then exit the reactor at the outlet port 14.

The slurry entering at the inlet port 12 has been preheated to, and maintained at, approximately 180 °C by controlling steam flow to the MTH feed heater (not shown) and the pressure inside the reactor 10 is approximately 23 bar. The residence, or contact time, of the slurry 59 in the reactor 10 is approximately one hour; however, it will be appreciated that because of the higher concentration of cyanide in the first stage 20, the reaction rate in that stage will be faster. The reaction rate in the second stage 24 will be slower than in the first stage 20 because of the reduced concentration of cyanide by the first stage 20. The third stage 28 will have the lowest concentration of cyanide and the slowest reaction rate.

The stage dividers 21 and 25 are comprised of separator walls 22 and 26 respectively and baffles 23 and 27 respectively. The separator walls 22 and 26 are advantageously inverted, truncated cones which direct the slurry 59 toward the center of the reactor 10, through the orifices 17, 19 formed thereby and into the baffles 23 and 27. The baffles 23 and 27 may simply be flat plates, but are advantageously cone-shaped, and direct the slurry 59 outwardly to the walls 18 of the reactor 10. The stage dividers 21 and 25 may be identical and are fabricated as a unit and held together by, for example, stringers or trusses between the respective separators and baffles. The conical baffles 23 and 27 have their apex at the center of the orifices 17, 19 formed in the separators 22 and 26. The dividers 21 and 25 may be welded inside the reactor 10 as a unit.

The purpose of the baffles 23,27 below the orifices 17,19 is to distribute the liquid slurry more uniformly at the entrance and throughout the MTH reactor 10. The baffles 23,27 deflect the high velocity jet from the orifices in annular fashion, giving intense stirring. Use of the baffles produces a closer approach to plug flow with the associated improvement in reaction conversion.

An advantageous configuration of the stage dividers 21 and 25 is shown in Fig. 4. The separator walls 22, 26 and the baffles 23, 27 form angles $\alpha$ and $\theta$ respectively which are preferably equal and approximately 30°. The truncated portion of the separator walls forms an orifice $d_o$ 17, 19 which is made small enough to create a jet which will induce mixing within the stage, i.e., velocities up to about 3 m/5. The opening $d_o$ is in the range of approximately 3,5-31 cm, in particular 5 cm. The base D of the baffles is preferably approximately four times the inlet opening $d_o$ and the apex of the baffles 23, 27 advantageously being a distance $\Delta x$ of approximately 1,2 cm up to a maximum of about 7,7 cm.

Tests show that 97% of iron cyanide will hydrolyze in 15 minutes at 180°C and pH is 8.5. The estimated time required for 99% destruction of iron cyanide is 20 minutes.

Since certain changes or modifications may be made by those skilled in the art without departing from the inventive concepts involved, it is the aim of the appended claims to cover all such changes and modifications falling within the true spirit and scope of the present invention.

## Claims

1. A hydrolysis reactor for the destruction of stable complex cyanides in a slurry treating process or plug flow stream, characterized by:
- a pressure vessel having inlet and outlet ports; and
- a stage divider within said vessel for dividing said vessel into a plurality of stages wherein said stages formed thereby are configured one above the other or one after the other and wherein said stage divider comprises a separator wall having an axial opening $d_o$ therein for increasing flow velocity and a baffle plate in fixed relationship to said separator wall for providing intense stirring of the slurry or plug flow stream.

2. The hydrolysis reactor as claimed in claim 1 characterized in that said separator is an inverted, truncated cone.

3. The hydrolysis reactor as claimed in claims 1 or 2 characterized in that said baffle is a cone coaxial with said separator and having its apex spaced apart from said opening in said separator.

4. The hydrolysis reactor as claimed in any one of claims 1-3 characterized by a baffle within said pressure vessel at said inlet port.

5. The hydrolysis reactor as claimed in any one of claims 1-4 characterized in that said axial opening $d_o$ is in the range of 3,5-31 cm.

6. The hydrolysis reactor as claimed in any one of claims 1-5 characterized in that said baffle is a flat plate.

7. The hydrolysis reactor as claimed in claim 3 characterized in that the apex of said baffle is spaced apart from said separator by a distance $\Delta x$ in the range of 1,2-7,7 cm.

8. The hydrolysis reactor as claimed in claim 3 characterized in that said opening $d_o$ is 5 cm and said distance $\Delta x$ is 1,2 cm.

FIG.1

FIG.3

FIG.4

FIG.2